# EUROPEAN PATENT APPLICATION

(11) **EP 2 846 127 A1**
(43) Date of publication of application: **11.03.2015**
(21) Application number: 13784512.9
(22) Date of filing: 01.05.2013
(51) Int. Cl.: G01B 7/00, F03D 1/06, F03D 11/00, G01L 1/16, G01L 5/00

(54) **COLLISION POSITION DETECTION DEVICE, WIND POWER GENERATION DEVICE AND WIND POWER GENERATION SYSTEM**

(30) Priority: 01.05.2012 JP 2012104490
(71) Applicant: F.T. Innovation Inc., Tokyo 171-0021 (JP)
(72) Inventor: OKANO, Teruo, Tokyo 171-0031 (JP)
(74) Representative: Epping - Hermann - Fischer
(86) International application number: PCT/JP2013/062689
(87) International publication number: WO 2013/165011

(57) **Abstract**

A collision position detection device (50) comprises: a piezoelectric element (51) that generates a voltage by collision; signal detection means that detects a signal generated by the collision with the piezoelectric element (51); and processing means that identifies the position of the collision with the piezoelectric element based on the signal detected by the signal detection means. The piezoelectric element (51) is a long piezoelectric element (51) comprising a long piezoelectric body (51b), conductors (51a, 51c) layered on both surfaces of the piezoelectric body (51b), and a covering body (51d) that covers the peripheries of the conductors, wherein both of a leading end signal generated from a leading end of the long piezoelectric element (51) and a back end signal generated from a back end of the long piezoelectric element (51) can be detected to identify a collision position. The disposition of the collision position detection device in a windmill blade enables information about a bird colliding with the blade to be detected.

## Description

### Technical Field

The present disclosure relates to a collision position detection device as well as a wind power generation device and a wind power generation system provided with the collision position detection device.

### Background Art

In wind power generation devices, accidents in which birds failing to visually identify rotating blades collide with the blades have occurred. Some events in which not only wind power generation devices are damaged but also birds that are protected species, and migratory birds collide with the blades of wind power generation devices and die have been found. However, the birds that have fallen by the collision have often become food for nearby animals, and there has been no means of accurately understanding the actual situation of the collision of birds. In contrast, the construction of wind power generation devices not only on the ground but also on the sea has proceeded due to current power shortage, and bird victims have been feared since the wind power generation devices have tended to be constructed in the flight routes of migratory birds. However, it has been difficult to take effective measures because it has been difficult to understand actual situations.

There has been known a flying object detection device in which a plurality of line sensors are disposed at positions of which the distances from a wind power generation device are different, and the line sensors detect consecutive blocking of light from the farther to nearer positions from the wind power generation device, whereby the approach of a bird is detected, in order to prevent such accidents (Patent Literature 1).

In addition, there has been also a method, such as radar, of detecting flying object or bird by emitting electromagnetic waves from a wind power generation device, and acquiring a reflection from the forward flying object or bird. However, the system has become complicated and expensive. In addition, it has been impossible to exhibite data for clarifying whether or not collision actually occurs. Further, a method of installing a camera near a wind power generation device, photographing consecutively, and processing a flying body by an image processing technology has been conceivable; however, it has been necessary to analyze enormous volumes of photographing data, and the system has become complicated and expensive.

In contrast, a device for detecting vibration using a piezoelectric element has already existed (Patent Literature 2). Patent Literature 2 describes a vibration detection sensor in which a cable-shaped piezoelectric element is disposed perpendicularly on a substrate. The cable-shaped piezoelectric element comprises a core electrode, a piezoelectric body disposed around the core electrode, a ground electrode disposed around the piezoelectric body, and a covering layer with which the ground electrode is covered. It is said that connection of an output detector to an end of the cable-shaped piezoelectric element allows vibration to be detected by detecting an output change due to application of a bending load. In addition, the other end of the piezoelectric element, to which a disconnection detection resistance is connected in the vicinity of a leading end of the core electrode, is sealed with a conductive resin so that the leading end of the core electrode and the ground electrode can be conductively connected.

There has been also a cable-shaped pressure sensor including a piezoelectric body, with which the periphery of a cross-sectionally circular core electrode is covered, the piezoelectric body being covered with external electrodes, wherein the external electrodes include two external electrodes 1 and 2 disposed at a spacing (Patent Literature 3). Since application of pressure to the external electrodes results in inducement of a charge (Q) in the applied portions and the charge is accumulated in the capacitance (C) of the core electrode and the external electrodes, a vibration voltage (Vd = Q/C) can be detected by vibration voltage detection means. A signal is detected by the vibration voltage detection means 1 in the case of applying the pressure to the external electrode 1 or by the vibration voltage detection means 2 in the case of applying the pressure to the external electrode 2. It is said that the signal detection reveals whether the pressure has been applied to the external electrode 1 or external electrode 2 of the cable-shaped pressure sensor.

In addition, there has been also a sensor cable in which a cross-sectionally circular core electrode is covered with each of a piezoelectric body, a controlling resistance coating layer, a piezoresistance film layer, an electrical conductor layer, and a jacket layer (Patent Literature 4). A resistance between an electrical conductor and the controlling resistance coating layer, and a voltage difference between the core electrode and the controlling resistance coating layer are measured at both ends of the sensor cable to detect the deformation of the cable.

### Citation List

### Patent Literature

Patent Literature 1: Unexamined Japanese Patent Application Kokai Publication No. 2009-228554
Patent Literature 2: Unexamined Japanese Patent Application Kokai Publication No. 2006-78393
Patent Literature 3: Unexamined Japanese Patent Application Kokai Publication No. 2000-230872
Patent Literature 4: US Patent No. 6534999

### Summary of Invention

### Technical Problem

In the flying object detection device of Patent Literature 1, a flying object except birds, for example, a plastic bag or the like has been able to be mistakenly detected, and it has been difficult to judge whether the object actually collides or passes through a region in the vicinity of the wind power generation device. Particularly, in heavy snowfall areas and the like, there has been a problem that the influence of snow precludes accurate recognition of a flying bird and a time zone and a season in which observation is possible is limited. In addition, the image acquisition method has required deployment of a vision system using infrared radiation, or the like in order to detect a night flying object.

In contrast, a method of disposing collision position detection means in a windmill blade is also conceivable. However, the vibration detection sensor described in Patent Literature 2 can sense the vibration of the cable-shaped piezoelectric element but is not able to identify a vibration position. The cable-shaped pressure sensor described in Patent Literature 3 is also similar, it is just recognized whether pressure has been applied to the external electrode 1 or the external electrode 2, and it is difficult to identify a collision point. Further, the sensor cable described in Patent Literature 4 is a special cable, on which the controlling resistance coating layer and the piezoresistance film layer are layered, is not available, is prone to allow a signal to be attenuated due to the resistance film, and precludes signal reception with high sensitivity.

The present disclosure was accomplished in view of such actual circumstances, and an objective of the disclosure is to provide a collision position detection device capable of simply identifying a collision position in the case of collision.

Further, an objective of the disclosure is to provide a wind power generation system in which such a collision position detection device is disposed and a collision position can be identified when a bird collides with the a windmill blade.

### Solution to Problem

As a result of examining in detail a long piezoelectric element comprising the piezoelectric body, conductors layered on both surfaces of the piezoelectric body, and covering bodies with which the peripheries of the conductors are covered, the present inventor found that loading of an impact results in generation of electromotive force due to a piezoelectric effect between the conductors, a voltage signal due to the electromotive force is transmitted from an impacted portion to each of the leading end and back end of the piezoelectric element, the time of the transmission to each end accords with a distance from the impacted portion to each end, and a distance to a location to which the impact is applied can thus be calculated by detecting a difference between the times of the transmission to the ends, and the present disclosure was thus accomplished.

That is, the present disclosure is to provide a collision position detection device comprising:
a piezoelectric element that generates a voltage by collision;
signal detection means that detects a signal generated by the collision with the piezoelectric element; and
processing means that identifies a position of the collision with the piezoelectric element based on the signal detected by the signal detection means,
wherein the piezoelectric element is a long piezoelectric element comprising a long piezoelectric body and a pair of conductors that transmit a signal generated by the piezoelectric body;
the signal detection means detects both of a leading end signal generated from a leading end of the long piezoelectric element and a back end signal generated from a back end of the long piezoelectric element; and
the processing means identifies the position of the collision with the piezoelectric element based on a signal generation time difference between the leading end signal and the back end signal.

In addition, the present disclosure is to provide the collision position detection device, wherein the processing means further evaluates collision strength based on signal strengths of the leading end signal and the back end signal.

In addition, the present disclosure is to provide a wind power generation device comprising the collision position detection device, wherein
the piezoelectric element is disposed in a windmill blade; and
the signal detection means and the processing means can identify a collision position where a collision object collides with the blade.

In addition, the present disclosure is to provide a wind power generation system comprising the wind power generation device and a receiving device, wherein
the receiving device comprises a receiver, a controller, and a storage;
the receiver receives signal information output from the collision position detection device;
the storage stores signal information received by the receiver, and a signal-impact object table in which the signal information is associated with the kind of a collision object; and
the controller compares the signal information stored in the storage with the signal-impact object table to identify the kind of a collision object colliding with the blade.

In addition, the present disclosure is to provide the wind power generation system further comprising laser irradiation means that irradiates the collision object with a laser.

In addition, the present disclosure is to provide the wind power generation system further comprising a sound generation device that generates sound toward the collision object.

### Advantageous Effects of Invention

According to the collision position detection device of the present disclosure, a collision position where collision occurs can be detected in a simple structure.

According to the wind power generation system of the present disclosure, the position of a collision object colliding with a windmill blade can be detected.

### Brief Description of Drawings

FIG. 1 is a view that explains a piezoelectric element used in the collision position detection device of the present disclosure;
FIG. 2 is a view that schematically explains the collision position detection device of the present disclosure;
FIG. 3 is a time chart view of a circuit for processing a signal from a piezoelectric element used in the collision position detection device of the present disclosure;
FIG. 4 is a view for explaining the wind power generation system of the present disclosure;
FIG. 5 is a schematic view of the wind power generation device of the present disclosure;
FIG. 6 is a block diagram that illustrates the structure of a receiving device according to the wind power generation system of the present disclosure;
FIG. 7 is a signal-impact object table stored in the storage of a receiving device according to the wind power generation system of the present disclosure;
FIG. 8 is a view for explaining the wind power generation system of the present disclosure, in which the view illustrates the wind power generation system comprising a cylindrical diffuser, a laser irradiation device, and a sound generation device; and
FIG. 9 is a block diagram that illustrates the structure of a receiving device used in the wind power generation system of the present disclosure.

### Description of Embodiments

A first embodiment of the present disclosure is a collision position detection device comprising: a piezoelectric element that generates a voltage by collision; signal detection means that detects a signal generated by the collision to the piezoelectric element; and processing means that identifies the position of the collision to the piezoelectric element based on the signal detected by the signal detection means, wherein the piezoelectric element is a long piezoelectric element comprising a long piezoelectric body and a pair of conductors that transmit a signal generated by the piezoelectric body; the signal detection means detects both of a leading end signal generated from a leading end of the long piezoelectric element and a back end signal generated from a back end of the long piezoelectric element; and the processing means identifies the position of the collision to the piezoelectric element based on a signal generation time difference between the leading end signal and the back end signal.

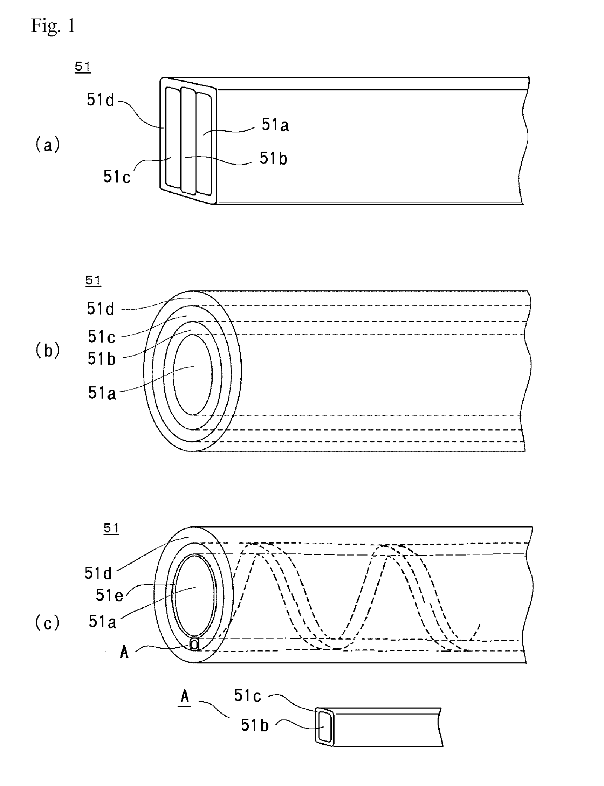

A piezoelectric element 51 used in the present disclosure comprises a long piezoelectric body and a pair of conductors that transmit a signal generated by the piezoelectric body, and the periphery of the piezoelectric element may be further covered with a covering body. Each of the conductors in a pair, disposed in the piezoelectric body, functions as an "electrode." For convenience, the conductor with which a collision object collides is referred to as an external conductor 51 c, while the other conductor is referred to as a ground conductor 51 a. However, either of the electrodes in a pair may be the external conductor 51 c, and the other may be the ground conductor 51 a. The ground conductor 51 a and the external conductor 51c are disposed in a piezoelectric body 51b without coming into contact with each other. Thus, for example, as illustrated in FIG. 1A, conductors 51a and 51c, which are layered on both surfaces of a long plate-shaped piezoelectric body 51b, respectively, and of which the peripheries are further covered with a protective covering 51 d, can be used. The shape of the piezoelectric body 51b is not limited to a long plate shape but may be, for example, a cable shape. FIG. 1B illustrates an aspect of a cable sensor-shaped piezoelectric element 51 in which a ground conductor 51a has a cable shape, and a piezoelectric body 51b, an external conductor 51c, and a protective covering 51d are sequentially formed in a coaxial cable shape on the periphery of the ground conductor 51a. Further, the shape of the external conductor 51c is not limited to a plate shape either but may be a cylindrical or film shape that covers the piezoelectric body 51b. Thus, the piezoelectric body 51b covered with the external conductor 51c may be layered on or wound around the cable-shaped ground conductor 51a covered with an insulating layer 51e, and the periphery thereof may be covered with the protective covering 51d. FIG. 1C illustrates a piezoelectric element 51 in which a covering piezoelectric body A in which a piezoelectric body 51b is covered with an external conductor 51c is wound around a cable-shaped ground conductor 51a covered with an insulating layer 51e, and the periphery thereof is covered with a protective covering 51d.

The ground conductor 51a and the external conductor 51c comprises a member that can function as an electrode, preferably a metal such as copper, tin, silver, or aluminum, and a conductor in which a silver alloy is coiled around a soft copper wire, a tin-plated soft copper wire, a silver-plated soft copper wire, or a copper wire in coil form, or the like can be used. In addition, the piezoelectric body 51b is a dielectric that generates a voltage when pressure is applied. For example, a mixture of polyvinylidene fluoride and mixture of polyvinylidene fluoride and another resin, a copolymer of vinylidene fluoride with trifluoroethylene, or another high-molecular piezoelectric body; lead titanate, lead zirconate, or lead titanate zirconate which is a mixed crystal thereof, a composite obtained by adding the compound to rubber, a resin, or the like, a piezoelectric ceramic, or the like can be used. In addition, a synthetic resin such as polyvinyl chloride, polyethylene, or polypropylene can be preferably used for the insulating layer 51e or the protective covering 51 d. The shape of the piezoelectric body, the conductor, and the coating body can be appropriately selected from plate shapes as well as foil shapes, thin film shapes, cable shapes, braided net shapes, and the like depending on the shape of a final long piezoelectric element. For example, when the piezoelectric element has a coaxial cable shape, a soft copper wire can be preferably used for the ground conductor 51a, the soft copper wire is covered with polyvinylidene fluoride to make the piezoelectric body 51b, the periphery of the piezoelectric body 51b is covered with a braided soft copper wire to make the external conductor 51 c, and the periphery thereof is covered with a synthetic resin film to make the protective covering 51d, which can be preferably used. By using the braided copper wire composed of soft copper asan external conductor 51c, a restoring force of the piezoelectric body 51b can be secured after impacting. In addition, when polyvinyl chloride or polyethylene is used in the protective covering 51d, flexibility can be imparted to the piezoelectric element 51 to facilitate the disposition of the piezoelectric element 51 along a curved surface shape. Further, moderate elasticity of the protective covering 51d allows the shape thereof to be restored in a short time even after impacting.

Further, the cross-sectional area of the piezoelectric element 51 used in the present disclosure (the inner area of the protective covering 51d) is preferably 1 to 100 mm², more preferably 2 to 70 mm². In the present disclosure, a voltage is detected from the piezoelectric element 51, but it is not necessary to take a large current. The thickness of the piezoelectric body 51b can be increased in the range described above to secure signal strength, and besides, the piezoelectric element 51 is small and light and can be therefore also easily disposed. In addition, the length of the piezoelectric element 51 is preferably 5 to 2000 m, more preferably 10 to 1500 m. In this range, a collision position can be precisely detected.

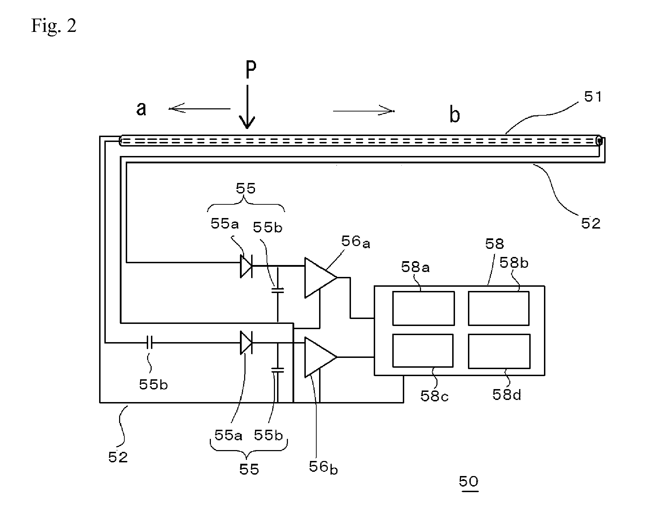

The collision position detection device of the present disclosure detects a signal from the piezoelectric element 51. For convenience, any one end of the piezoelectric element 51 is referred to as a leading end, and the other end is referred to as a back end. The collision position detection device 50 of the present disclosure is schematically illustrated in FIG. 2. The ground conductor 51a and the external conductor 51c in the leading end of the piezoelectric element 51 are linked to pulse waveform shaping circuits 55 through cables 52. A signal from the leading end of the piezoelectric element 51 is input into the pulse waveform shaping circuit 55 and then amplified by an operation amplifier 56a. A signal from back end is also processed in a similar manner. The ground conductor 51 a and the external conductor 51c are linked to the pulse waveform shaping circuit 55 through the cable 52, and a signal input into the pulse waveform shaping circuit 55 is amplified by an operation amplifier 56b.

Each of the pulse waveform shaping circuits 55 is a circuit that comprises a rectifier diode 55a and a smoothing capacitor 55b and converts a current from the piezoelectric element 51 into a shaped pulse signal, and corresponds to the signal detection means in the present disclosure. The operation amplifiers 56a and 56b are electrically connected to a microcomputer 58. The microcomputer 58 corresponds to the processing means and comprises an input-output circuit 58a, a CPU 58b, a storage 58c, and a timer circuit 58d. The input-output circuit 58a can be composed of an A/D converter that converts an analog signal input from the operation amplifier 56a or 56b into a digital signal and outputs, for example, information (electrical signal) such as an operation result stored in the storage 58c to a wireless conversion device, which is not illustrated, and/or the like. The CPU 58b is a central processing unit that controls the operation of the microcomputer 58 based on a program in the storage 58c. The storage 58c is a memory comprising a RAM (Random Access Memory) that temporarily stores an operation result by the CPU 58b, and/or the like, and a ROM (Read Only Memory) in which a program and data are stored. The timer circuit 58d is a circuit that starts or finishes counting according to directions from the CPU 58b.

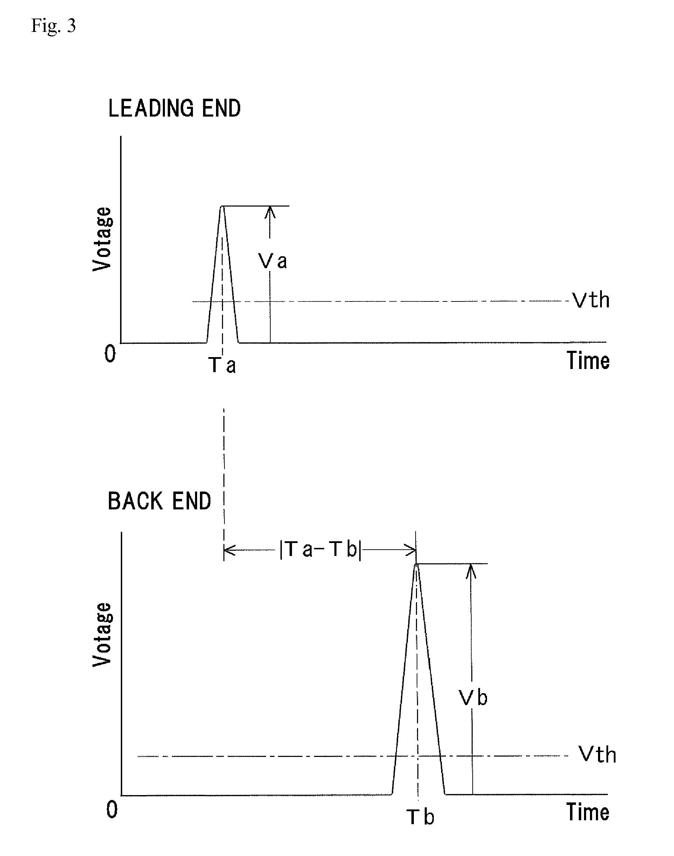

When the piezoelectric element 51 is subject to impact, electromotive force is generated due to a piezoelectric effect between the ground conductor 51a and the external conductor 51c, and a voltage signal due to the electromotive force is transmitted from an impacted portion to each of the leading and back ends of the piezoelectric element 51. Each of current peaks from the leading and back ends of the piezoelectric element 51, detected by the pulse waveform shaping circuits 55, has a time difference depending on a distance from the impacted portion to each end. FIG. 3, in which the horizontal axis is regarded as a time axis and the vertical axis is regarded as a voltage axis, indicates the potential changes of signals from the leading and back ends of the piezoelectric element 51. Due to the collision of a collision object P to the piezoelectric element 51, a signal of an increased potential is received from the leading end at the time of Ta, and a signal of an increased potential is received from the back end at the time of Tb. Each signal is input into the microcomputer 58 after waveform-shaping in the operation amplifier 56a or 56b. In the microcomputer 58, Ta and Tb which are the signal generation times are identified by the timer circuit 58d, and the absolute value of Ta - Tb is calculated by the CPU 58b. The impact position can be calculated based on the information and the signal transmission rate of the piezoelectric element 51.

For example, in a case that the length of the piezoelectric element 51 is 50 m, signal is transmitted full length of the piezoelectric element 51 at a rate of 200 milliseconds, and |Ta - Tb| is zero, it can be calculated that a collision object collides an approximately center of the piezoelectric element 51, that is, a position of 25 m from the leading end. In contrast, in the case of Ta < Tb, and |Ta - Tb| being 200 milliseconds, it can be calculated that the collision object collides with the leading end of the piezoelectric element 51.

In addition, a signal-collision position table indicating a correlation between Ta, Tb, and |Ta - Tb| and the impact position of the piezoelectric element 51 may be previously stored in the storage 58c. By related Ta, Tb, and calculated |Ta - Tb| to the signal-collision position table, an impacted position in the piezoelectric element 51 can be detected. Incidentally, Vth indicates a threshold value the operational amplifier 56a or 56b, and setting such as cutting of a signal of Vth or less in the comparator function of the operation amplifier 56a or 56b enables such a configuration that a signal of a certain value or less is not measured.

In addition, for the measurement of the signal, in a case that a timing generation circuit disposed in a measurement circuit, pulse generation time may be measured using as a reference the timing generation circuit, or it may be composed that an input signal at the time of either Ta or Tb is input as an interrupt signal for the microcomputer 58, thereby measuring |Ta-Tb|. In accordance with the present disclosure, a signal delay difference between both ends can be sufficiently measured if the length of the piezoelectric element 51 is 5 m or more.

In addition, Va indicates the signal strength of a leading end signal while Vb indicates the signal strength of a back end signal, and the magnitude of impact can be detected by measuring the signal strengths. When a signal is not attenuated in the piezoelectric element 51, Va and Vb are the same value. In contrast, when Va and Vb are different from each other due to attenuation, it is preferable to measure both and to record any higher value. However, both Va and Vb may be recorded, or the average of Va and Vb may be recorded.

The collision position detection device of the present disclosure may further comprise a smoothing capacitor 55b in either of the cables 52 through which signals are input from the leading end or the back end into the pulse waveform shaping circuits 55. FIG. 2 illustrates an aspect in which the smoothing capacitor 55b is disposed in a part of the cable adjacently disposed in the ground conductor 51a in the leading end of the piezoelectric element 51. By the disposition of the smoothing capacitor 55b, time where an impact signal from the piezoelectric element 51 is input into the pulse waveform shaping circuit 55 can be delayed in a range of several mSec to several tens of mSec, thereby calculating |Ta - Tb| and identifying an impact portion on the piezoelectric element 51 based on the |Ta - Tb| even using the microcomputer 58 with low processing speed. Unlike measurement circuits with light and laser reflection, high-speed precise signal processing is unnecessary, and the present disclosure can be realized with hardware with an inexpensive configuration. Incidentally, when the signal-collision position table is stored, a collision position is identified based on |Ta - Tb| in a case in which an additional smoothing capacitor is included.

Information such as signal reception time Ta from the leading end of the measured piezoelectric element 51, signal reception time Tb from the back end, Va and Vb, calculated |Ta - Tb|, and the impact position of the piezoelectric element 51 is stored in the storage 58c.

The collision position detection device 50 using the long piezoelectric element 51 of the present disclosure can be used as part of a security system to detecte an intrusion location by laying such a piezoelectric element 51 throughout an intrusion position for an intruder from the outside. Conventionally, when wires are put, cutting of a wire has been received as a signal, and a potential change occurring in any of the wires has been received, so that identification of an intrusion point has required disposition of a plurality of wires. However, in the present disclosure, a collision point can be identified by evaluating potential changes in the leading and back ends of a wire-shaped piezoelectric element using the wire-shaped piezoelectric element, and therefore, an intrusion point can be identified only by disposing one long piezoelectric element 51.

The collision position detection device 50 of the present disclosure uses the long piezoelectric element 51 and electrically measures impact force from collision with the long piezoelectric element 51 to enable identification of a collision position. Since a voltage in a case in which a collision object collides with the piezoelectric element 51 is directly measured, the influence of other noises can be inhibited, and sensitivity is also excellent. Thus, for example, the piezoelectric element 51 is disposed along a pipe line in a plant including a pipe line through which much fluid is transferred, sound generated due to the breakage of the pipe line, or the like is recognized as vibration, and a breakage point can also be identified. In contrast, detection sensitivity is reduced or controlled so as to prevent slight vibration from being detected, the piezoelectric element 51 is buried in the underground of forest, a private house, or the like, and is adjusted to receive only a signal in the case of applying pressure of a certain level or more to the piezoelectric element 51, and the signal can also be detected as the intrusion of a harmful animal or the like.

Incidentally, the collision position detection device 50 of the present disclosure can be provided with a mechanism that regularly applies weak impact to the piezoelectric element 51 and receives a generated test pulse in order to detect the cutting state of the piezoelectric element 51. The deterioration and cutting state of the piezoelectric element 51 can be monitored, for example, by transmitting a test pulse to the piezoelectric element 51 and monitoring the level of a reflected signal from a terminal. Since a signal characteristic is also reduced when deterioration occurs due to corrosion and/or the like, the state of the piezoelectric element 51 can be easily monitored by the above. Judgment as a cutting state can be made when it is impossible to receive a test pulse.

Further, the collision position detection device 50 of the present disclosure can be adjacently provided with a temperature sensor, a warning sound generation device, and/or the like. For example, when the temperature sensor is disposed, an inexpensive fire detection system where fire in a duct or the like can be easily detected can be constructed by letting the temperature sensor sense both impact and temperature. Further, when the warning sound generation device is adjacently disposed, warning sound can be generated at the time of receiving a signal, for example, with the proviso that the time of receiving a signal can be identified as the time of the intrusion of a harmful animal.

A second embodiment of the present disclosure is a wind power generation device comprising the collision position detection device, wherein the piezoelectric element is disposed in a windmill blade, and the signal detection means and the processing means can identify a collision position where a collision object collides with the blade. In addition, a third embodiment of the present disclosure is a wind power generation system comprising the wind power generation device and a receiving device, wherein the receiving device comprises a receiver, a controller, and a storage; the receiver receives signal information output from the collision position detection device; the storage stores signal information received by the receiver, and a signal-impact object table in which the signal information is associated with the kind of a collision object; and the controller compares the signal information stored in the storage with the signal-impact object table to identify the kind of a collision object colliding with a blade.

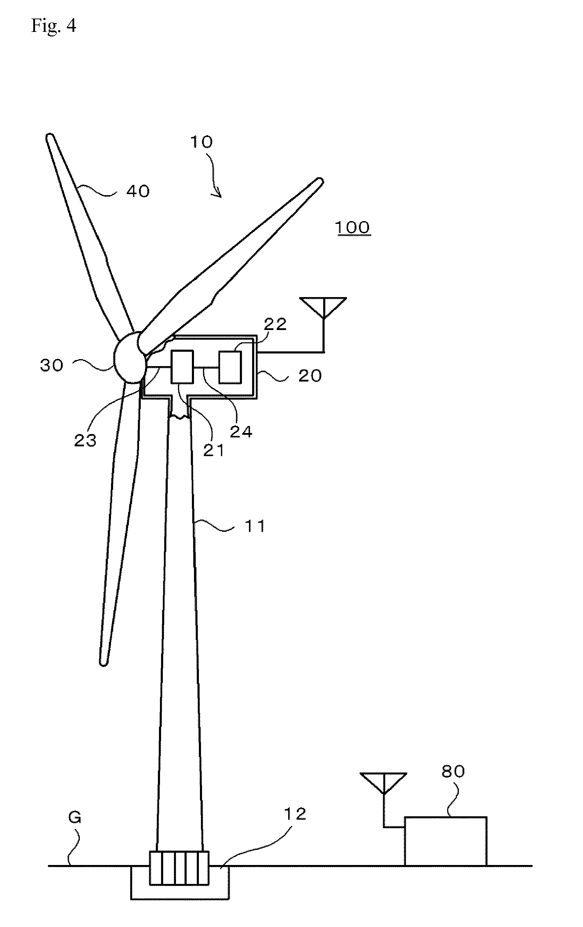

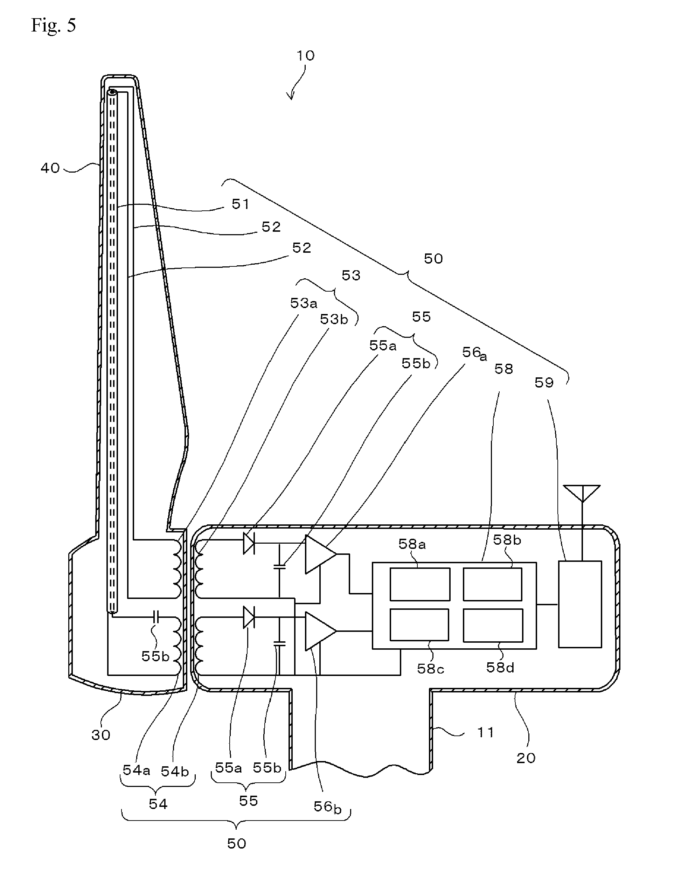

As illustrated in FIG. 4, the wind power generation system 100 according to an embodiment of the present disclosure comprises: a wind power generation device 10 comprising a tower 11 erected on a foundation 12 installed on a ground surface G and made of reinforced concrete, a nacelle 20 installed on the upper end of the tower 11, and a hub 30 installed on the front end side of the nacelle 20 and supported rotatably around a rotation axis in a horizontal lateral direction ; and a receiving device 80. As illustrated in FIG. 5, the wind power generation device 10 is equipped with the above mentiond collision position detection device 50. The disposition of a piezoelectric element 51 in a blade 40 enables a voltage in a case in which a bird as an impact object collides with the blade 40 to be detected and the state of the collision with the blade 40 to be detected.

The tower 11 is cylindrically formed of a metal such as, for example, steel. In the interior of the tower 11, an electric appliance that is not permitted to be exposed to extraneous wind and rain, and/or the like are disposed. The nacelle 20 is cylindrically formed, and a change gear 21 for increasing speed and an electric generator 22 are disposed in the interior of the nacelle.

The hub 30 comprises a plurality of (for example, three) blades 40 extend radially. The blades 40 are formed, in hollow form, of a material that is capable of transmitting vibration due to impact and has predetermined hardness, such as, for example, FRP (Fiber Reinforced Plastics) or a fiber reinforced composite material.

A rotor shaft 23 extending into the interior of the nacelle 20 is connected to the nacelle 20 side of the hub 30. The other end of the rotor shaft 23 is connected to the change gear 21 for increasing speed in the nacelle 20. A power transmission shaft 24 is connected to the change gear 21. In addition, the other end of the power transmission shaft 24 is connected to the electric generator 22.

In the wind power generation device 10 formed as above, the rotation of the hub 30 is transmitted to the rotor shaft 23 when wind hits the blades 40 to rotate the hub 30. Then, the change gear 21 is rotated by the rotation of the rotor shaft 23, and the electric generator 22 is driven via the power transmission shaft 24 to generate electricity. The generated electric power is transmitted to the electric appliance in the tower 11 through a cable which is not illustrated.

In addition, the nacelle 20 can horizontally turn on the upper end of the tower 11 together with the blades 40 and is controlled to be always directed at a windward direction by a driving device and a control device, which are not illustrated, to efficiently generate electricity.

The collision position detection device 50 for detecting collision of a collision object with a blade 40 will be explained below.

In the piezoelectric element 51 used in the wind power generation device 10 and wind power generation system 100 of the present disclosure, a voltage is generated by a piezoelectric effect between the ground conductor 51a and the external conductor 51c when the piezoelectric body 51b is impacted. The generated voltage in this case is preferably 100 to 200 V in a case in which an object having a mass of 100 g drops from a height of 30 cm onto the piezoelectric element 51. This is because this range enables the precise detection of the impact of a bird without generating a voltage in the case of a low impact such as wind. Such sensitivity can be controlled by selection of a piezoelectric material included in the piezoelectric body, particularly by adjustment of the contents of polyvinylidene fluoride, lead zirconate titanate, and the like in the piezoelectric material, adjustment of the thickness of the piezoelectric body, and the like. Sensor cables with the sensitivity described above selected from commercially available sensor cables and the like may also be used. The sensitivity described above enables the function of a signal filter to be offered to the piezoelectric element 51 per se so that a low voltage is generated or a voltage is hardly generated by slight vibration and the piezoelectric element 51 to react only due to an impact with a certain level or more. As a result, a signal due to a small impact such as dust or dirt is cut by virtue of the filter property of the piezoelectric element 51. A signal with Vth or less can also be cut by the comparator functions of the operation amplifiers 56a and 56b in an input and adjusted to prevent a small impact except a collision object from being detected, to improve signal precision for the collision of a bird. The setting of Vth can be appropriately selected depending on an environment in which the wind power generation system 100 is set.

As illustrated in FIG. 5, the collision position detection device 50 comprises the piezoelectric element 51, signal detection means comprising two pulse waveform shaping circuits 55, and processing means comprising a microcomputer 58. Each of the ground conductor 51a and external conductor 51c of the piezoelectric element 51 in the leading end side of the blade 40 is linked to a cable 52, a signal is input into the pulse waveform shaping circuit 55 through a first rotational transformer 53 comprising a rotational coil 53a and a fixed coil 53b, and the input signal is then amplified by an operation amplifier 56a. Similarly, each of the ground conductor 51a and external conductor 51c of the piezoelectric element 51 in the side, closer to the hub 30, of the blade 40 is linked to a cable 52, input into a pulse waveform shaping circuit 55b is performed through a second rotational transformer 54 comprising a rotational coil 54a and a fixed coil 54b, and an input signal is then amplified by an operation amplifier 56b.

Each of the signals amplified by the operation amplifiers 56a or 56b is input into the processing means comprising the microcomputer 58, Ta and Tb, which are signal reception times, and |Ta - Tb| which is a difference between signal transmissions are calculated as explained in the section of the collision position detection device 50, and the collision position of the piezoelectric element 51 and, in turn, the collision position of the blade 40 can be identified based on these numerical values.

In addition, in a CPU 58b, of signals input from the back end side and leading end side of the piezoelectric element 51 into the microcomputer 58, an earlier arriving signal and a more slowly arriving signal of signals generated by collision P and transferred from the leading end or the back end may be regarded as a first collision signal and a second collision signal, respectively. When the first collision signal is input, timing is started by a timer circuit 58d, to measure time before inputting the second collision signal which more slowly arrives. In this case, setting is performed so that the timing by the timer circuit 58d is stopped when the second collision signal is input.

In addition, the piezoelectric element 51 used in the disclosure can generally transmit a signal in a length of 50 m for 150 to 300 milliseconds. Since the transmission rate is low compared to the transmission time of laser light or the like, |Ta - Tb| is high, and therefore |Ta - Tb| can be detected with high sensitivity. Further, as illustrated in FIG. 5, a smoothing capacitor 55b is disposed in the signal transmission circuit in the hub 30 side of the piezoelectric element 51, whereby a signal difference |Ta - Tb| can be further increased. As a result, the present disclosure can be carried out in a simple and inexpensive structure using a general-purpose computer. Unlike FIG. 5, the smoothing capacitor 55b may also be disposed in the signal transmission circuit of the leading end side of the blade 40 of the piezoelectric element 51.

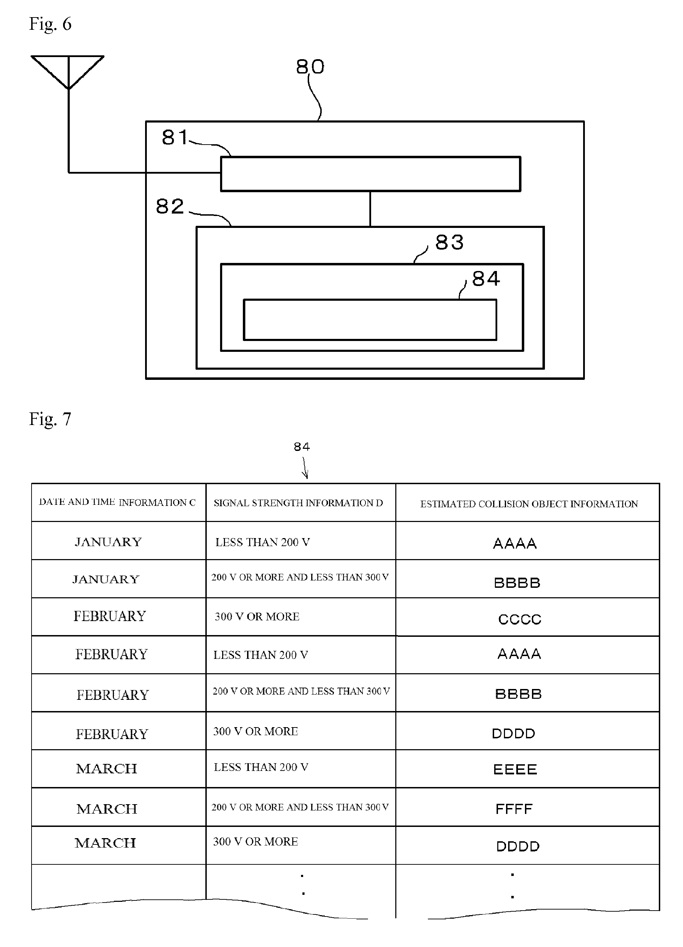

In the present disclosure, a wireless conversion device 59 that transmits a signal output from the microcomputer 58 to a receiving device 80 is disposed. The receiving device 80 comprises a receiver 81 and a controller 82 as illustrated in FIG. 6.

In the receiver 81, reception processing corresponding to the transmission method of the wireless conversion device 59 is carried out. For example, the wireless conversion device 59 formed of a battery-operated weak wireless module can be used.

When the wireless conversion device 59 is formed of a weak wireless module, spread spectrum communication can be performed. In the spread spectrum communication, a carrier wave modulated (spread) using a spread code in a transmitting side is transmitted. In this case, the phase of the spread code is synchronized by shifting to a degree corresponding to transmission delay time, and multiplied by a received signal. In the receiving side, the spread code is phase-shifted to a degree corresponding to transmission delay time and reversely spread. For succeeding in reception in a state in which transmission delay time is unknown, a synchronous detection method in which a trial of reverse spread operation is repeated while gradually sliding a spread code, for example, a shift amount to be applied to the spread code is increased by an amount corresponding to one-chip (minimum time unit in spread code) time every trial step, and the success or failure of the reception is then judged depending on whether or not a reproduced carrier wave is at a promising level can be adopted.

As another synchronous detection method, a method using the phase change points of a received signal carrier wave is also acceptable. The phase change points arranged in time series are compared with the reverse of previously prepared spread codes for one-chip time to calculate the candidates of the difference amounts (shift amounts) between the phase change points and the spread codes. Reverse spread is tried on a despreading code determined from every candidate of the difference amounts, to judge whether or not demodulation succeeds. In the method, reverse spread is carried out on a previously estimated despreading code, and therefore received signals can be synchronized at high speed. Further, the phase change points arranged in time series are compared with the reverse of the spread codes corresponding to one-chip time, and therefore, even when received signals include a short phase change point due to noise, the phase change point is not detected as a phase change point appearing at an integral multiple of one-chip time. Therefore, even in the case of disposition in a device generating large noise, such as a wind power generation device, an influence by the noise does not occur.

Information such as Ta, Tb, |Ta - Tb|, Va or Vb, or a collision position, input into the microcomputer 58, is sent from the wireless conversion device 59 and received by the receiver 81.

The controller 82 is a central processing unit that controls the action of the receiving device 80 according to a program stored in the storage 83. Signal information received by the receiver 81 is stored in the storage 83.

A signal-impact object table 84 that indicates a correlation between signal information generated by the piezoelectric element 51 and an impact object corresponding to the signal information is further stored in the storage 83. Examples of the signal information include signal strength such as a measurement voltage or voltage variation time, while examples of the impact object include bird names. The signal-impact object table 84 may include an item such as a season or time. In addition, the signal-impact object table 84 is preferably produced to conform to each region in which the wind power generation device 10 is disposed. This is because a collision object may differ according to a region. An example of the signal-impact object table 84 is indicated in FIG. 7.

The wind power generation system 100 formed as described above acts as follows:
First, when use of the wind power generation device 10 illustrated in FIG. 4 is started and wind hits the blade 40, the hub 30 rotates about the rotor shaft 23. A bird failing to view the blade 40 rotating at high speed approaches the wind power generation device 10 as a collision object and and collides with the blade 40.

The bird collides with the blade 40, whereby the piezoelectric element 51 is directly or indirectly impacted to generate a voltage. Then, current is transmitted to the leading end side and back end side of the piezoelectric element 51. Incidentally, since the blade 40 is formed of a material capable of transmitting vibration due to impact and has predetermined hardness, the vibration of the blade 40 can allow the piezoelectric element 51 to generate a voltage even if the collision object does not directly collide with the piezoelectric element 51.

The current arriving at each end of the piezoelectric element 51 is transmitted to each of the first rotational transformer 53 and the second rotational transformer 54 through each of the cables 52, and the current arriving at each of the first rotational transformer 53 and the second rotational transformer 54 is converted into a pulse signal shaped in each pulse waveform shaping circuit 55. Each of the pulse signals shaped in the pulse waveform shaping circuits 55 is amplified in each of the operation amplifiers 56a and 56b.

The analog signal signals amplified in the operation amplifiers 56a and 56b are output to the microcomputer 58 and then converted into digital signals in the input-output circuit 58a of the microcomputer 58.

In the microcomputer 58, time Ta where a signal is generated from the leading end of the piezoelectric element 51 and time Tb where a signal is generated from the back end are measured and stored, Va and Vb which are signal strengths at Ta and Tb are measured and stored, the absolute value of Ta and Tb are calculated, a collision position is identified, and such information is stored in the storage 58c, as described in the section of the collision position detection device. Such information is transmitted to the receiving device 80 via the wireless conversion device 59.

After demodulation of the information received by the receiver 81, at least time difference information A about |Ta - Tb|, collision information B about a signal generated at earlier time of the Ta and Tb described above (first collision signal), date and time information C about a date and time when a first collision signal is input, signal strength information D about the signal strength of the first collision signal, collision position information E about impact position information, and the like are stored in the storage 83 disposed in the controller 82. Information about Ta and Tb, and the like may also be used instead of each information of the first collision signal.

The controller 82 can compare the signal-impact object table 84 previously stored in the storage 83 with the date and time information C and the signal strength information D received by the receiving device 80 to identify the impact object. For example, when the input date and time information C is January and the signal strength information D is 250 V, the controller 82 can extract a bird name BBBB as the collision object with reference to the signal-impact object table 84. In addition, when input the date and time information is March and the signal strength information D is 350 V, the controller 82 can extract a bird name DDDD as the collision object with reference to the signal-impact object table 84. Incidentally, the signal-impact object table 84 may be further minutely classified. For example, the time-based classification into 0:00 to 6:00, 6:00 to 12:00, 12:00 to 18:00, 18:00 to 24:00, and the like may be performed. Since information about bird sizes, flying time, seasons, and the like is understood to some degree by the research of birds, the colliding bird can be substantially identified by comparison with such information. Where a display device is disposed in the receiving device 80, a position where a collision object collides with the blade 40 may be displayed on the display device based on the collision position information E described above. Further, information about the identified collision object may be displayed on the display device. The wind power generation system 100 of the present disclosure can identify a collision object impacted thereto during operation in a simple mechanism.

In the present disclosure, gathering of impact data from a plurality of wind power generation devices enables the situation of a bird and/or the like colliding with the wind power generation devices to be understood on a global scale. Based on the data, the locational conditions of a wind power generation device that can avoid collision can be identified. As a result, a contribution to environmental protection can be made. Besides, the system of the present disclosure uses no electromagnetic wave, and therefore has no influence on birds and neighboring inhabitants and has a low environmental load.

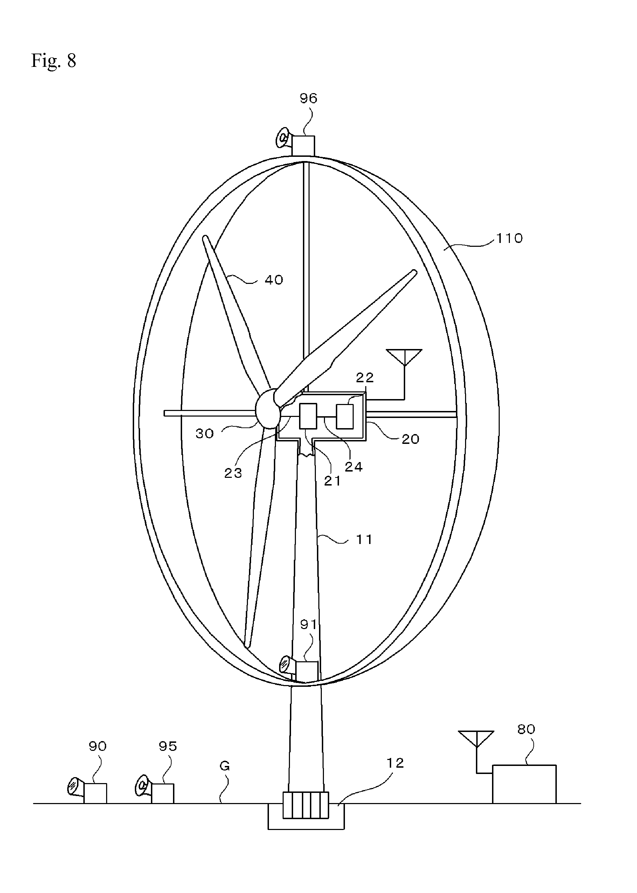

The wind power generation system 100 of the present disclosure can take bird avoidance means against collision objects using collision position information E stored in a receiving device 80, thereby enableing a new collision to be avoided. For example, as illustrated in FIG. 8, the bird avoidance means such as laser illumination means 90 and 91 that irradiates a laser toward a collision object and sound generation devices 95 and 96 that generates sound toward a collision object can be disposed. The wind power generation device 10 may comprise a cylindrical diffuser 110 around a blade 40 in order to increase the velocity of wind toward the blade 40. FIG. 8 illustrates an aspect in which the laser irradiation device 90 is disposed on a ground surface G and the laser irradiation device 91 is disposed on the diffuser 110. The sound generation devices 95 and 96 are devices that generate sound which a bird dislikes. FIG. 8 illustrates an aspect in which the sound generation device 95 is disposed on the ground surface G and the sound generation device 96 is disposed on the diffuser 110. For controlling the laser irradiation devices 90 and 91 and the sound generation devices 95 and 96 not only ON-OFF control but also such control that the laser irradiation devices 90 and 91 perform irradiation with lasers having various colors and light quantities may be performed, and a color and a light quantity may be changed depending on the kind of a colliding bird. Further, various frequencies and sound volumes may be generated from the sound generation devices 95 and 96, to avoid the collision of a flying bird. An illumination device having a light emitting diode may be disposed without limitation to the laser irradiation devices 90 and 91.

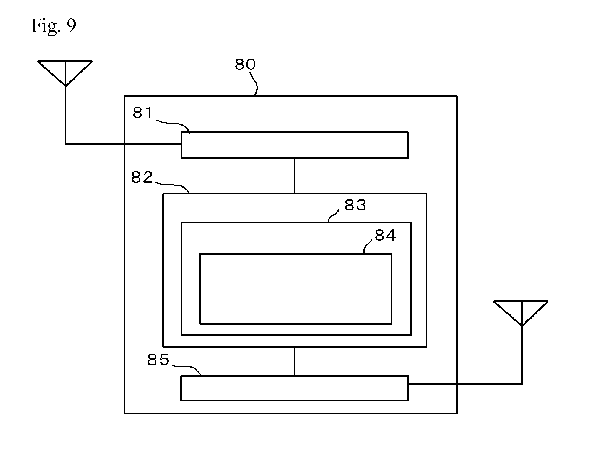

The wind power generation system 100 in which bird avoidance means is disposed can include, for example, the receiving device 80 including a receiver 81, a controller 82, and a transmitter 85, as illustrated in FIG. 9. For example, such setting that an operation signal for ON-OFF controlling the laser irradiation devices 90 and 91 and/or the sound generation devices 95 and 96 is output from the controller 82 to the transmitter 85 when new collision positional information E is stored in the receiving device 80 is made. For example, when a bird collides with any of the blades 40, Ta, Tb, |Ta - Tb|, and collision position information are identified by a collision position detection device 50 and stored in a storage 58c in a microcomputer 58 which is processing means. The information is sent to the receiving device 80 via a wireless conversion device 59 and stored in a storage 83. When the collision position information E is updated due to new impact, an operation signal for turning on the laser irradiation devices 90 and 91 and/or the sound generation devices 95 and 96 toward a collision position and turning off the devices after a lapse of predetermined time is output from the controller 82. In a case in which migratory birds fly in crowds, more collisions can be avoided by taking the bird avoidance means after sensing the first collision.

For the bird avoidance means, in the wind power generation system 100 of the present disclosure, the hub 30 of the wind power generation device 10 may comprise a transparent member, a projector may be housed in the hub 30, and a raptor image may be projected from the projector toward the transparent member. The raptor image is projected on a surface of the hub 30, and the image can be seen from the outside through the transparent member. A bird approaching the blade 40 views the raptor image projected from the hub 30, whereby the bird can be allowed to avoid approaching the hub 30 or the blade 40. In addition, the image is not limited to raptor, but a wide variety of images can be targeted as long as the images allow birds to avoid approaching. Such an image can be projected by transmitting information of directions for projecting the image for predetermined time from the controller 82 to the transmitter 85 when new collision positional information E is stored in the receiving device 80.

In a case in which a windfarm is formed of a plurality of wind power generation systems 100, the windfarm may be formed so that when a collision position detection device 50 disposed in a certain wind power generation system 100 detects the collision of a bird, the information is transmitted to the other wind power generation systems 100 to stop the rotation of the blades 40 of the wind power generation systems 100, or may be formed so that the laser irradiation devices and sound generation devices of the other wind power generation systems 100 can be ON-OFF controlled.

The present disclosure is not limited to the embodiments mentioned above but can be subjected to various modifications and applications. The respective components in the embodiments mentioned above may also be combined freely.

The present disclosure is based on Japanese Patent Application No. 2012-104490 filed on May 1, 2012. All of the specification, claims, and drawings of Japanese Patent Application No. 2012-104490 are incorporated herein by reference.

### Reference Signs List

10: Wind power generation device
11: Tower
12: Foundation
15: Illumination device
20: Nacelle
21: Change gear
22: Electric generator
23: Rotor shaft
24: Power transmission shaft
30: Hub
40: Blade
50: Collision position detection device
51: Piezoelectric element
51 a: Ground conductor
51b: Piezoelectric body
51c: External conductor
51d: Protective covering
51 e: Insulating layer
52: Cable
53: First rotational transformer
53a: Rotational coil
53b: Fixed coil
54: Second rotational transformer
54a: Rotational coil
54b: Fixed coil
55: Pulse waveform shaping circuit
55a: Rectifier diode
55b: Smoothing capacitor
56a, 56b: Operation amplifier
58: Microcomputer
58a: Input-output circuit
58b: CPU
58c: Storage
58d: Timer circuit
59: Wireless conversion device
80: Receiving device
81: Receiver
82: Controller
83: Storage
84: Signal-impact object table
85: Transmitter
90, 91: Laser irradiation device
95, 96: Sound generation device
100: Wind power generation system
110: Diffuser

## Claims

1. A collision position detection device comprising:
a piezoelectric element that generates a voltage by collision;
signal detection means that detects a signal generated by the collision with the piezoelectric element; and
processing means that identifies a position of the collision with the piezoelectric element based on the signal detected by the signal detection means,
wherein the piezoelectric element is a long piezoelectric element comprising a long piezoelectric body and a pair of conductors that transmit a signal generated by the piezoelectric body;
the signal detection means detects both of a leading end signal generated from a leading end of the long piezoelectric element and a back end signal generated from a back end of the long piezoelectric element; and
the processing means identifies the position of the collision with the piezoelectric element based on a signal generation time difference between the leading end signal and the back end signal.

2. The collision position detection device according to Claim 1, wherein the processing means further evaluates collision strength based on signal strengths of the leading end signal and the back end signal.

3. A wind power generation device comprising the collision position detection device according to Claim 1 or 2, wherein
the piezoelectric element is disposed in a windmill blade; and
the signal detection means and the processing means can identify a collision position where a collision object collides with the blade.

4. A wind power generation system comprising the wind power generation device according to Claim 3 and a receiving device, wherein
the receiving device comprises a receiver, a controller, and a storage;
the receiver receives signal information output from the collision position detection device;
the storage stores signal information received by the receiver, and a signal-impact object table in which the signal information is associated with the kind of a collision object; and
the controller compares the signal information stored in the storage with the signal-impact object table to identify the kind of a collision object colliding with the blade.

5. The wind power generation system according to Claim 4, further comprising laser irradiation means that irradiates the collision object with a laser.

6. The wind power generation system according to Claim 4 or 5, further comprising a sound generation device that generates sound toward the collision object.
